# EUROPEAN PATENT SPECIFICATION

(11) **EP 0 873 234 B1**
(45) Date of publication and mention of the grant of the patent: **07.06.2000**
(21) Application number: 96904342.1
(22) Date of filing: 09.02.1996
(51) Int. Cl.: B29C 63/02, E04F 13/00, E04C 2/12, E04C 2/24, E04B 1/26

(54) **A METHOD FOR AFFIXING A COATING FILM PROVIDING PROTECTION AGAINST WEATHER INFLUENCES TO A WOODEN BUILDING ELEMENT AS WELL AS A WOODEN BUILDING ELEMENT**
VERFAHREN ZUM KASCHIEREN VON HOLZBAUELEMENTEN MIT EINER WITTERUNGSBESTÄNDIGEN SCHICHT SOWIE EIN HOLZBAUELEMENT
PROCEDE POUR FIXER A UN ELEMENT DE CONSTRUCTION EN BOIS UNE FEUILLE DE REVETEMENT ASSURANT LA PROTECTION CONTRE LES INTEMPERIES, ET ELEMENT DE CONSTRUCTION EN BOIS

(30) Priority: 13.02.1995 NL 9500261
(43) Date of publication of application: 28.10.1998
(73) Proprietor: Marolian B.V., 5652 AX Eindhoven (NL)
(72) Inventor: LIEBREGTS, Franciscus, Wilhelmus, Maria, NL-5653 RN Eindhoven (NL)
(74) Representative: Fieret, Johannes, Ir.
(86) International application number: NL9600062
(87) International publication number: WO9625286

(56) References cited:
- WO-A-91/01873
- BE-A- 660 497
- BE-A- 852 695
- DE-A- 3 148 436
- DE-B- 1 296 296
- DE-B- 1 779 692
- DE-C- 3 527 006
- US-A- 5 070 664
- DATABASE WPI Week 9308 Derwent Publications Ltd., London, GB; AN 93-062237 XP002004610 & JP,A,05 010 016 (IG GIJUTSU KENKYUSHO KK) , 19 January 1993
- DATABASE WPI Week 9404 Derwent Publications Ltd., London, GB; AN 94-031514 XP002004611 & JP,A,05 338 395 (IG GIJUTSU KENKYUSHO KK) , 21 December 1993
- DATABASE WPI Week 9429 Derwent Publications Ltd., London, GB; AN 94-238165 XP002004612 & JP,A,06 170 945 (SEKISUI CHEM IND CO LTD) , 21 June 1994
- DATABASE WPI Week 7940 Derwent Publications Ltd., London, GB; AN 79-72761b XP002004613 & JP,A,54 108 887 (MATSUSHITA ELEC WORKS) , 25 August 1979
- DATABASE WPI Week 9130 Derwent Publications Ltd., London, GB; AN 91-218984 XP002004614 & JP,A,03 140 384 (SEKISUI CHEM IND KK) , 14 June 1991

## Description

The invention relates to a method for renovating a wooden casing connected to a building, said wooden casing comprising at least two different parts connected to each other at the junction, said method comprising steps of preparing the wooden casing by sanding and, if necessary, levelling worn-out coated surfaces of said parts.

The invention also relates to a wooden casing connected to a building, said wooden casing comprising at least two different parts connected to each other at the junction, said wooden casing being renovated with the method according to the invention.

Wooden casings in buildings are constantly exposed to damaging influences of a varying nature, such as damage to the wood under the influence of the sun, wind and rain, and mechanical damage caused by people occupying the building. It has been aimed at for years to protect the wood in the best possible manner against said damage by applying one or more coats of paint.

A drawback of this is that painting is a relatively labour-intensive and thus costly process. Moreover, paintwork requires restorative maintenance on a regular basis, because its durability is not completely satisfactory. As an alternative it is possible to affix a plastic foil to the wooden casing instead of paint. The plastic foil provides wooden casings with a greater resistance to weather influences, in particular moisture, and is furthermore sufficiently resistant to mechanical loads emanating from normal use of the building.

It is known, inter alia from Belgian patent BE-852695, to affix a plastic foil to a wooden base. However, the method according to said patent is limited to affixing a foil to plate-shaped elements. The known method is not suitable for affixing a foil to objects having a more complicated shape, like a wooden casing. At the location of the junctions between various parts of the wooden casing, for example at the junction between a horizontal jamb and a vertical jamb of the casing, the seam present at the junction will shrink as a consequence of the warping of the wood. When a foil is affixed over the seam the risk of cracks being formed in the foil as a result of said warping of the wood cannot be excluded.

The object of the present invention is to provide a method wherein the above drawbacks are avoided.

This object is achieved by the method according to the invention in that the method comprises further the steps of providing a groove at a junction of said parts, adhering mutually separated foil parts to the surfaces of said parts on either side of said groove, folding two opposed end edges of said foil parts into said groove and sealing said groove with a sealant.

In this manner the warping of the various wooden parts does not affect the separate foil films. The expansion and shrinking of the interconnected parts is met by the sealant provided in the groove. Furthermore, due to the overlapping foil parts water is prevented from finding its way to the wooden parts.

A wooden casing renovated with the method of claim 1 is defined in claim 2.

The advantage of plastic foil films as a coating material for wooden casings over paintwork is in particular the fact that plastic foil films have a greater resistance to weather influences and damage and can be readily affixed in a uniform thickness by using the method according to the invention, also in those places where grooves are present, that said materials require less maintenance and that it is possible to achieve a low and relatively stable moisture content in the wooden casings.

It has to be noted that from the German patent DE-C1-35.27.006 a base plate is known which is provided with a cover foil on the upper side of said plate and with a protection foil on the bottom side of said plate. Near the edge end at the bottom side of said plate a groove is provided in which the edges of the cover foil and the protection foil are folded after which said groove is filled with a sealant. Said groove is used as a draining groove due to which water coming from the upper side of said plate will fall of said plate. The sealant is used to prevent water from flowing between the cover foil or protection foil respectively and the base plate. By the method according to the above mentioned German patent, the base plate forms one unitary part from one and the same material.

This known method is not suitable nor intended for affixing a foil to a casing located in a building, having a more complicated shape, which is already provided with a protective coating like paint and which casing needs restorative maintenance.

In a preferred embodiment, the wooden casing as defined in claim 2 has one side, located inside the building, which is provided with foil parts having a water vapour permeability of 0-25 g/m²/24 hours and an opposite side, located outside the building, which is provided with foil parts having a water vapour permeability of 25-75 g/m²/24 hours.

The use of foil materials having different vapour permeability (WVP) values makes it possible to achieve that the water vapour moves more readily in the one direction than in the opposite direction. This results in a more or less continuous flow-through of the water vapour which is constantly present in the wooden casings. This is of importance in connection with preventing wood rot and enhancing the durability of the wood.

The WVP value of a foil material is indicated by the number of grammes of water vapour which pass a film of the material of a particular thickness and a surface area of 1 m² in 24 hours with a relative humidity difference of 85% and a temperature of 23 °C. The WVP value is measured according to DIN 53122.

The side having the lower WVP value must be turned towards a room having a relatively high humidity level, so that the humidity level on the side having the higher WVP value is lower. Thus there will be hardly any accumulation of moisture in the wood, as a result of which the occurrence of wood rot is prevented. In case of a casing or a door in a building this means that the side having the lower WVP value is located inside the building, whilst the side having the higher WVP value is located outside. In particular during the winter period the air humidity will be considerably higher inside a building than outside. The affixed foils ensure that there will be hardly any accumulation of moisture in the wood. The small amount of moisture which has accumulated during the winter and which has found its way into the wood from the room inside the building will exit the wood again through the outward side in the summer.

The invention will be explained in more detail hereafter with reference to a drawing, in which:
Figure 1 is a perspective view of a corner of a casing;
Figure 2 is a cross-sectional view of the casing shown in Figure 1, seen in the direction indicated by arrow II;
Figure 3 is a cross-sectional view of the casing shown in Figure 1, seen in the direction indicated by arrow III.

Like parts are numbered alike in the Figures.

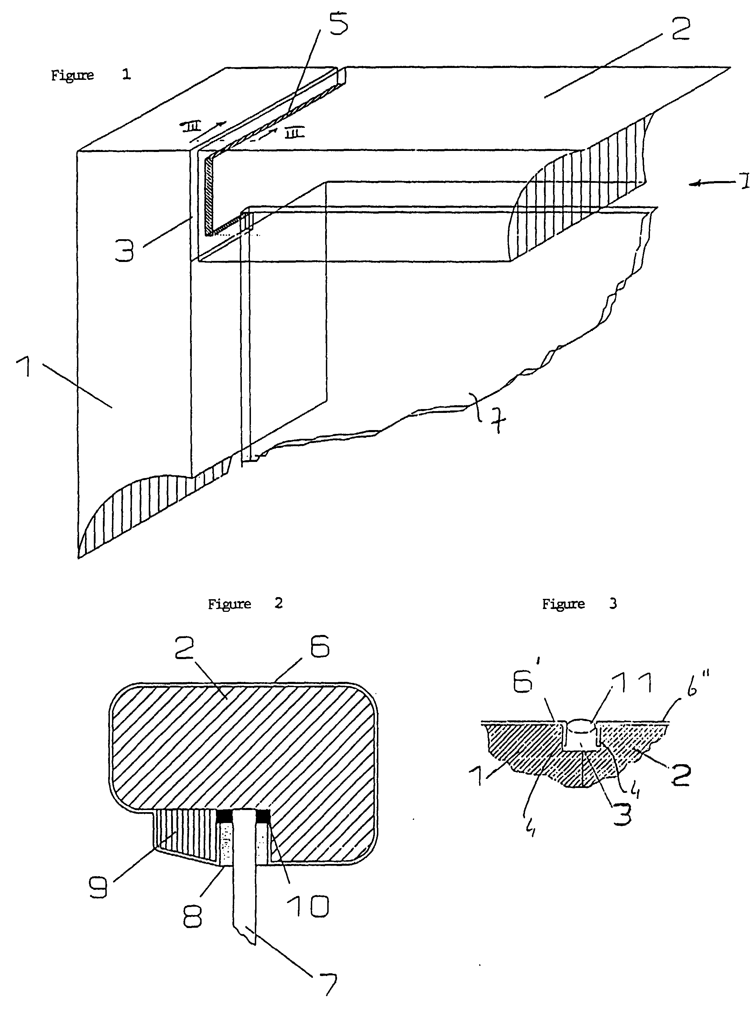

Figure 1 shows a left-hand top corner of a wooden window casing. The window casing is provided with a vertical lateral jamb 1 and a horizontal upper jamb 2 connected thereto. The junction between the two jambs 1, 2 is provided with a groove 3 formed by means of a milling operation. The bottom of the groove 3 is indicated by the hatched area 5. The jambs 1, 2 support a glass window pane 7.

Figure 2 shows a cross-section II of the horizontal upper jamb of the window casing shown in Figure 1. The window pane 7 is on either side provided with a cell tape 10 of foamed neoprene at the location of its abutment against the horizontal upper jamb 2. The window pane 7 is connected to the upper jamb 2 by means of a glazing bead 9. Near the window pane 7 the plastic foil 6 is folded into a groove present between the window 7 on the one hand and the glazing bead 9 and the upper jamb 2 on the other hand. The grooves are furthermore provided with a sealant 8. The sealant 8 preferably has a permanent elasticity of 25%.

Figure 3 shows a cross-section III of the junction between the vertical lateral jamb 1 and the horizontal upper jamb 2. A groove 3 has been formed between lateral jamb 1 and upper jamb 2 by means of a milling operation. Foils 6', 6" have been glued onto the jambs 1, 2 on either side of groove 3. The ends of the foil 6', 6" have been folded into groove 3. Following that groove 3 has been sealed by means of a sealant 11.

### Embodiment

The procedure prior to the affixation of a foil film is as follows. Nail holes and grooves caused by splintering are levelled with a two-component filler. Wood rot is removed and the holes formed are filled with a two-component wood repair paste (Woodfill or Paint Repair Paste). All surfaces of the wooden casing are thoroughly sanded with P60 and finish-sanded with P120 to obtain a smooth surface. Then the grooves between the horizontal and vertical jambs are milled out to a width of 4 mm and a depth of 6 mm. Then the casing is freed from dust with a soft brush and degreased with a cloth moistened with UNIVERSOL.

A PVC foil having a thickness of 50 µm is used for coating the casing, to which foil a film of Scotch Grip glue is applied, which is marketed in the Netherlands by 3M Nederland B.V. Correctly dimensioned parts of foil are cut, whereby 1 : 1 working drawings of the casing are used. After the protective foil has been removed from the adhesive film the foil parts are affixed to the casing jambs in a tile-wise overlapping relationship from the bottom to the top, the amount of overlap being 4 mm. It is important thereby that the foil is smoothed out from the centre of a jamb towards the outsides with a soft cloth. Final smoothing of the foil takes place by means of a soft rubber spatula. In the corners the foil is firmly pressed on by means of a spatula of a hard plastic material with rounded side edges in order to prevent the foil from being damaged. The foil parts of jambs 1 and 2 are folded into the milled-out groove 3 as shown in Figure 3. Finally the grooves 3 and the clearances between the window pane on the one hand and the glazing beads and the rebates on the other hand are sealed with a sealant 8, 11.

Various techniques may be used for adhering a foil to a surface of the wooden casings. If desired a film of a thermoplastic foil is directly adhered to a smooth surface, whereby said foil is heated and a pressure is exerted. Better results are obtained, however, when an intermediate film of an adhesive material is used when affixing a foil to the smooth, level surface of a wooden casing, which may or may not be pre-treated with paint. A film of a liquid-diluted adhesive material is applied to at least one surface of the casing or to the foil to be affixed, or to both, and following that the foil is affixed to the surface of the casing. Said liquid-diluted adhesive may be any one of several suitable commercially available types of adhesive to be used for adhering plastic films to wood. As a rule said adhesives consist of a solution or a dispersion of an adhesive material in a volatile solvent.

Preferably a film consisting of a plastic foil, to which an adhesive film was already applied at the time of its production, is affixed to the smoothed surface of a casing. A foil material of this kind consists of three films, viz. the actual plastic foil, a dried adhesive film and a neutral foil serving as a temporary coating film, which only slightly adheres thereto. The protective coating film is pulled off the adhesive film before said latter foil material is used, and the foil material is ready to be adhered to the surface of a casing. By casings which are relatively large it will be impossible to avoid using several foil parts. It is preferred to cut said separate parts from the foil material in such dimensions that successive parts slightly overlap. The foil parts are placed in a tile-wise overlapping relationship in order to prevent water from finding its way to the casing.

Junctions between the parts of the wooden casings, for example at the transitions from horizontal to vertical parts, first need to be provided with a groove, for example by means of a milling operation. Then the parts positioned on either side of the milled-out groove are coated with two mutually separated foil parts, whereby each foil part is folded into the groove and attached to the wall thereof, after which the groove is sealed with a sealant. The advantage of this in comparison with coating the junction with a continuous foil is that no cracks are formed in the foil near the junction by the warping of the wood and the consequent shrinking and expansion of said wood.

The material for the plastic foil may be a commercially available foil material. It is preferred to select a foil of a thermoplastic plastic material, because this material can be readily processed. Thermoplastic plastic materials melt upon being heated, but do not decompose and can be readily welded, therefore. This is advantageous when two separate films of foil material are interconnected along a line. It is also possible to use a foil material of a thermosetting plastic material, if desired, a drawback being the fact that generally this material cannot be welded, because it decomposes upon being heated and does not melt.

A suitable thermoplastic foil material having good weather resisting properties is a material from the group consisting of:
polyvinyl chloride (PVC), polyethylene (PE), polytetrafluor ethylene (PTFE), polymethyl methacrylate (PMMA), polycarbonate (PC), polyamide (PA), poly-(acrylonitrile/styrene/acrylate) ASA - mixed and stirred - and silicon (SI).

Particularly preferred is a foil comprising an adhesive film, for example of the trademarks Foilcoat, Avery Denisson, 3M, Gravitype, MACal 9800 and CSR 100 of MACtac, or Filmolux 100-300 of Neschen International. Foil materials having a film thickness of 25-250 µm are preferred.

Furthermore it is advantageous for the foil material to contain an anti-oxidant, soot, or a UV-absorbing material or mixtures thereof. Additives of this kind enhance the weather resistance of the material.

## Claims

1. Method for renovating a wooden casing connected to a building, said wooden casing comprising at least two different parts (1, 2) connected to each other at a junction, said method comprising the step of preparing the wooden casing by sanding and, if necessary, levelling worn-out coated surfaces of said parts, characterized in that the method comprises further the steps of:
- providing a groove (3) at the junction of said parts,
- adhering mutually separated foil parts (6', 6") to the surfaces of said parts (1, 2) on either side of said groove (3),
- folding two opposed end edges (14) of said foil parts into said groove and,
- sealing said groove (3) with a sealant (11).

2. Wooden casing connected to a building, said wooden casing comprising at least two different parts (1, 2) connected to each other at the junction, said wooden casing being renovated with the method according to claim 1, characterized in that the wooden casing comprises
- a groove (3) at the junction of said parts (1, 2),
- mutually separated foil parts (6', 6") adhered to the surfaces of said parts (1, 2) on either side of said groove (3), whereby opposed end edges (4) of said foil parts (6', 6") are folded into said groove,
- a sealant (11) sealing said groove (3).

3. Wooden casing according to claim 2, characterized in that one side of said wooden casing, located inside the building, is provided with foil parts (6, 6', 6") having a water vapour permeability of 0-25 g/m²/24 hours and an opposite side of said wooden casing located outside the building is provided with foil parts (6, 6', 6") having a water vapour permeability of 25-75 g/m²/24 hours.

## Patentansprüche

1. Verfahren zur Renovierung einer Holzverkleidung welche mit einem Gebäude verbunden ist, wobei die Holzverkleidung wenigstens zwei verschiedene Teile (1, 2) umfaßt, welche miteinander bei einer Verbindung verbunden sind, wobei das Verfahren den Schritt einer Vorbereitung der Holzverkleidung durch ein Schleifen und, falls notwendig, ein Einebnen von abgenutzten, beschichteten Oberflächen dieser Teile umfaßt, dadurch gekennzeichnet, daß das Verfahren weiters die Schritte umfaßt:
- Bereitstellen einer Nut (3) an der Verbindung der Teile,
- Anhaften von voneinander getrennten Folienteilen (6', 6") an den Oberflächen der Teile (1, 2) an jeder Seite der Nut (3),
- Falten von zwei gegenüberliegenden Endrändern (14) der Folienteile in die Nut, und
- Abdichten der Nut (3) mit einem Dichtmittel (11).

2. Holzverkleidung, welche mit einem Gebäude verbunden ist, wobei die Holzverkleidung wenigstens zwei verschiedene Teile (1, 2) umfaßt, welche miteinander an der Verbindung verbunden sind, wobei die Holzverkleidung mit dem Verfahren gemäß Anspruch 1 renoviert wird, dadurch gekennzeichnet, daß die Holzverkleidung umfaßt:
- eine Nut (3) an der Verbindung der Teile (1, 2),
- voneinander getrennte Folienteile (6', 6"), welche an den Oberflächen der Teile (1, 2) an jeder Seite der Nut (3) festgelegt sind, wobei gegenüberliegende Endränder der Folienteile (6', 6") in die Nut gefaltet sind,
- ein Dichtmittel (11), welche(s) die Nut (3) abdichtet.

3. Holzverkleidung nach Anspruch 2, dadurch gekennzeichnet, daß eine Seite der Holzverkleidung, welche an der Innenseite des Gebäudes angeordnet ist, mit Folienteilen (6, 6', 6") versehen ist, welche eine Wasserdampfdurchlässigkeit von 0 bis 25 g/m²/24 h aufweisen, und daß eine gegenüberliegende Seite der Holzverkleidung, welche an der Außenseite des Gebäudes angeordnet ist, mit Folienteilen (6, 6', 6") versehen ist, welche eine Wasserdampfdurchlässigkeit von 25 bis 75 g/m²/24 h aufweisen.

## Revendications

1. Procédé de rénovation d'un élément de construction en bois relié à un bâtiment, ledit élément de construction en bois comprenant au moins deux différentes parties (1, 2) reliées l'une à l'autre, à une jonction, ledit procédé comprenant la phase de préparation de l'élément de construction en bois par sablage et, si nécessaire, mise à niveau des surfaces à revêtement usé desdites parties, caractérisé en ce qu'il comprend encore les phases suivantes :
- prévoir une rainure (3) à la jonction desdites parties,
- faire adhérer mutuellement des parties de feuille séparées (6', 6") aux surfaces desdites parties (1, 2), de chaque côté de ladite rainure (3),
- replier les deux bords d'extrémité opposés (14) desdites parties de feuille dans ladite rainure, et
- sceller ladite rainure (3) avec un scellement (11).

2. Elément de construction en bois relié à un bâtiment, ledit élément de construction en bois comprenant au moins deux différentes parties (1, 2) reliées l'une à l'autre, à une jonction, ledit élément de construction étant rénové selon le procédé suivant la revendication 1, caractérisé en ce qu'il comprend:
- une rainure (3) à la jonction desdites parties,
- des parties de feuille séparées (6', 6") qui adhérent aux surfaces desdites parties (1, 2) de chaque côté de ladite rainure (3), de manière que les deux bords d'extrémité opposés (14) desdites parties de feuille (6', 6") soient repliés dans ladite rainure, et
- un scellement (11) qui scelle ladite rainure (3).

3. Elément de construction en bois suivant la revendication 2, caractérisé en ce qu'un côté dudit élément, situé dans le bâtiment, est muni de parties de feuille (6, 6', 6") qui ont une perméabilité à la vapeur d'eau de 0 à 25 g/m²/24 heures et que le côté opposé dudit élément, situé hors du bâtiment, est muni de parties de feuille (6, 6', 6") qui ont une perméabilité à la vapeur d'eau de 25 à 75 g/m²/24 heures.
